# EUROPÄISCHE PATENTSCHRIFT

(11) **EP 1 199 468 B1**
(45) Veröffentlichungstag und Bekanntmachung des Hinweises auf die Patenterteilung: **09.08.2006**
(21) Anmeldenummer: 01124848.1
(22) Anmeldetag: 18.10.2001
(51) Int. Cl.: B60K 6/04, F02N 11/04

(54) **Hybridfahrzeug**
Hybrid vehicle
Véhicule hybride

(30) Priorität: 21.10.2000 DE 10052231
(43) Veröffentlichungstag der Anmeldung: 24.04.2002
(73) Patentinhaber: DaimlerChrysler AG, 70567 Stuttgart (DE)
(72) Erfinder: Bitsche, Otmar, 70329 Stuttgart (DE); Noreikat, Karl-Ernst, 73733 Esslingen (DE); Ostertag, Tobias, 73723 Esslingen (DE); Rennefeld, Alfons, 70327 Stuttgart (DE); Schwienbacher, Wolfgang, 72116 Mössingen (DE); Stephan, Sven, 99752 Bleicherode (DE); Weinschenker, Lars, 73084 Salach (DE)

(56) Entgegenhaltungen:
- EP-A- 1 013 494
- DE-A- 4 202 083
- DE-A- 19 835 575
- DE-A- 19 945 473
- DE-C- 19 849 051
- US-A- 5 513 719
- US-A- 5 730 676

## Beschreibung

Die Erfindung betrifft ein Fahrzeug gemäß dem Oberbegriff des unabhängigen Anspruchs.

Aus der DE 198 49 051 C1 ist ein Fahrzeug mit einem Starter/Generator-System zum Starten einer Brennkraftmaschine bekannt. Dabei ist eine elektrische Maschine zwischen Brennkraftmaschine und Getriebe angeordnet. Ein Problem besteht darin, daß der Starter/Generator nicht zum Antrieb des Fahrzeugs verwendet werden kann. Üblicherweise werden zwei elektrische Maschinen vorgesehen, wenn sowohl Starter/Generator-Funktionen als auch Hybridfunktionen im Fahrzeug realisiert werden sollen.

Aus der gattungsgemäßen DE 199 45 473 A1 ist ein Schaltgetriebe bekannt, das eine zusätzliche Zwischenwelle mit einem ersten und einem zweiten Zahnrad vorsieht. Die zusätzliche Zwischenwelle ist mit dem Rotor einer elektrischen Maschine verbunden und von dem Rotor antreibbar. Der zusätzlichen Zwischenwelle ist ein erstes Schalt- und Synchronisiermittel zugeordnet, welches zur Übertragung des elektromotorischen Moments der elektrischen Maschine von der zusätzlichen Zwischenwelle auf die Getriebeeingangswelle das erste Zahnrad der zusätzlichen Zwischenwelle synchronisiert und in Wirkverbindung bringt. Ein zweites Schalt- und Synchronisiermittel synchronisiert das zweite Zahnrad der zusätzlichen Zwischenwelle und bringt es in Wirkverbindung.

Aus der DE 42 02 083 A1 ist ein Hybridfahrzeug bekannt, bei dem eine Drehstrommaschine über die Vorgelegewelle eines Schaltgetriebes an einen konventionellen, verbrennungsmotorischen Antriebsstrang gekoppelt wird. Neben den bekannten Betriebsweisen eines Hybridantriebs ist vorgesehen, dass die Drehstrommaschine als Synchronisierhilfe zum Gangwechsel dient.

Der Erfindung liegt die Aufgabe zugrunde, ein Fahrzeug mit einer elektrischen Maschine, die sowohl als Starter/Generator als auch als Hybridantrieb verwendbar ist, anzugeben, dessen Antriebsstrang einen reduzierten Bauraum benötigt.

Diese Aufgabe wird bei einem Fahrzeug mit den Merkmalen des Anspruchs 1 gelöst.

Erfindungsgemäß sind im Fahrzeug Mittel vorgesehen, um ein elektromotorisches Moment einer elektrischen Maschine wahlweise auf die Getriebeeingangswelle oder die Getriebeausgangswelle zu schalten.

Vorzugsweise wird das Drehmoment mit unterschiedlichen Übersetzungsverhältnissen auf die Getriebeeingangswelle und auf die Getriebeausgangswelle übertragen.

Der Vorteil ist, daß nur eine einzige elektrische Maschine für Starter/Generator- und Hybridfunktionen benötigt wird. Die Maschine kann über frei zu wählende Übersetzungsverhältnisse auf unterschiedliche Anforderungen hin ausgelegt werden. Außer den bekannten Vorteilen des Parallelhybrides ist im erfindungsgemäßen Fahrzeug auch eine Starter/Generator-Funktion vorhanden.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung einer Anordnung mit einem Schaltgetriebe,
- Fig. 2: eine Prinzipdarstellung der Erfindung,
- Fig. 3: einen Teillängsschnitt durch das Schaltgetriebe aus Fig. 2 und
- Fig. 4: eine Prinzipdarstellung einer zu Fig. 2 alternativen, zweiten Ausführung der Erfindung mit einer zweiten elektrischen Maschine.

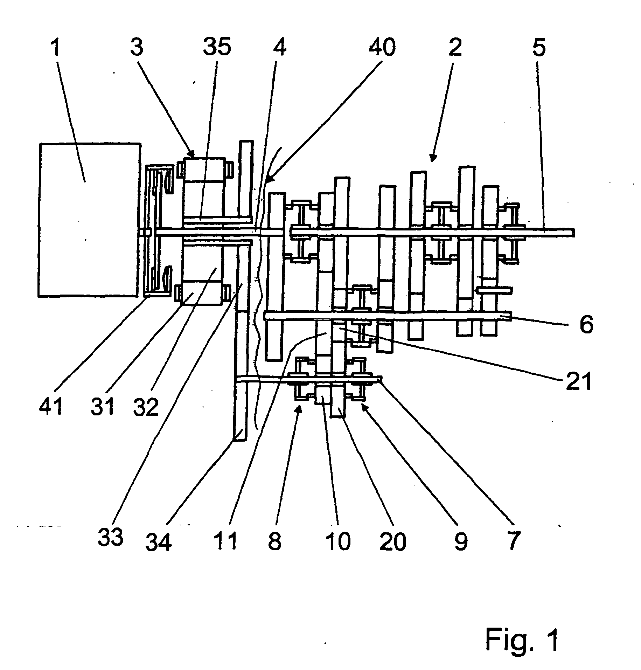

In Fig. 1 ist ein Ausschnitt aus dem Antriebsstrang eines Fahrzeugs mit einem Getriebe 2 dargestellt. In der Darstellung ist der Klarheit wegen eine zusätzliche Welle des Getriebes dergestalt idealisiert hervorgehoben, daß die Abbildung wie eine Seitenansicht wirkt. Die zusätzliche Welle ist entgegen der tatsächlichen Anordnung nach unten geklappt.

Das Schaltgetriebe 2 ist dazu vorgesehen, ein Drehmoment einer Antriebsmaschine 1, etwa einem Verbrennungsmotor, auf Antriebsräder, zu bewirken. Das Getriebe 2 weist eine Getriebeausgangswelle 5 und eine Getriebeeingangswelle 4 auf. Das Drehmoment der Antriebsmaschine 1 wird auf die Getriebeeingangswelle 4 und von dort auf die Getriebeausgangswelle 5 übertragen. Dazu ist eine Vorgelegewelle 6 vorgesehen, die in üblicher Weise mit Zahnrädern versehen ist, sowie Schalt- und Synchronisiermitteln, um zwischen verschiedenen Zahnrädern mit unterschiedlichen Übersetzungsverhältnissen in üblicher Weise umzuschalten. So kann das Drehmoment der Antriebsmaschine 1 mit verschiedenen Übersetzungen über das Getriebe 2 auf die Antriebsräder übertragen werden.

Weiterhin ist eine elektrische Maschine 3 zwischen Antriebsmaschine 1 und Getriebe 2 angeordnet, welche einen Rotor 32 und einen Stator 31 aufweist. Dabei ist die elektrische Maschine 3 als Innenläufer ausgebildet. Es kann jedoch auch eine Außenläuferanordnung verwendet werden.

Es sind Mittel 35, 33, 34, 7, 8, 9, 10, 20 vorgesehen, um ein elektromotorisches Moment der elektrischen Maschine 3 wahlweise entweder auf die Getriebeeingangswelle 4 oder die Getriebeausgangswelle 5 zu schalten. Die elektrische Maschine 3 wird als Starter/Generator betrieben, wenn ihr Drehmoment auf die Getriebeeingangswelle 4 übertragen wird.

Wird das Drehmoment auf die Getriebeausgangswelle 5 übertragen, wirkt die elektrische Maschine 3 wie eine weitere Antriebsmaschine, die statt oder zusätzlich zu der Antriebsmaschine 1 das Fahrzeug antreiben kann.

Der besondere Vorteil ist, daß dadurch dieselbe elektrische Maschine für zwei unterschiedliche Zwecke verwendet werden kann. Es wird also nur eine elektrische Maschine benötigt, um ein Fahrzeug mit Starter/Generator-Betrieb und als Parallelhybrid zu betreiben. Die mögliche Funktionsweise der elektrischen Maschine 3 hängt dann im wesentlichen nur von ihrer Baulänge ab.

Der Rotor 32 der elektrischen Maschine 3 wird von einem Rotorhalter 35 gehalten. Der Rotor 32 umgibt den Rotorhalter 35 koaxial, der die Getriebeeingangswelle 4 umgibt. Der Rotor ist drehfest mit einem dritten Zahnrad 33 verbunden. Dieses steht in Wirkverbindung mit einem vierten Zahnrad 34, welches drehfest mit einer zusätzlichen Welle 7 verbunden ist. Wenn der Rotor 32 dreht, rotiert das dritte Zahnrad 33 mit und kämmt mit dem vierten Zahnrad 34. Dadurch wird die zusätzliche Zwischenwelle 7 angetrieben.

Die zusätzliche Zwischenwelle 7 weist ein erstes Zahnrad 10 und ein zweites Zahnrad 20 auf. Die Vorgelegewelle 6 weist diesen Zahnrädern 10, 20 entsprechend zugeordnete Zahnräder 11, 21 auf. Wenn das erste Zahnrad 10 der zusätzlichen Zwischenwelle 7 mit dem ersten Zahnrad 11 der Vorgelegewelle 6 zusammenwirkt, wird das Drehmoment der elektrischen Maschine 3 auf die Getriebeeingangswelle 4 übertragen. Die drehende elektrische Maschine 3 kann so, bei geschlossener Kupplung 41, das Losbrechmoment der Antriebsmaschine 1 überwinden und diese aus dem Stillstand starten.

Wenn das zweite Zahnrad 20 der zusätzlichen Zwischenwelle 7 mit dem zweiten Zahnrad 21 der Vorgelegewelle 6 zusammenwirkt, wird das Drehmoment der elektrischen Maschine 3 auf die Getriebeausgangswelle 5 übertragen, und die elektrische Maschine 3 kann zum Antrieb des Fahrzeugs verwendet werden. Dies entspricht einem Parallelhybrid. Dabei ist vorteilhaft, daß durch die an sich frei wählbaren Übersetzungsverhältnisse der Zahnräder 10, 11, 20, 21 die eingesetzten elektrischen Maschinen 1 auf unterschiedliche Anforderungen hin günstig ausgelegt werden können.

So kann z.B. ein Übersetzungsverhältnis i der ersten Zahnräder 10, 11 beim Starten von i=2:1 und der zweiten Zahnräder 20, 21 von i=1:1 zum Fahrbetrieb gewählt werden. Daraus resultiert eine deutliche Wirkungsgradverbesserung der elektrischen Maschine 3.

Zur Übertragung des elektromotorischen Moments der elektrischen Maschine 3 von der zusätzlichen Zwischenwelle 7 auf die Getriebeeingangswelle 4 wird das erste Zahnrad 10 mit dem ersten Zahnrad 11 der Vorgelegewelle 6 in Wirkverbindung gebracht, indem ein erstes Schalt- und Synchronisiermittel 8 die beiden Zahnräder 10, 11 synchronisiert und in Wirkverbindung bringt.

Zur Übertragung des elektromotorischen Moments der elektrischen Maschine 3 von der zusätzlichen Zwischenwelle 7 auf die Getriebeausgangswelle 4 wird das zweite Zahnrad 20 mit dem zweiten Zahnrad 21 der Vorgelegewelle 6 in Wirkverbindung gebracht, indem ein zweites Schalt- und Synchronisiermittel 9 die beiden Zahnräder 20, 21 synchronisiert und in Wirkverbindung bringt.

Bei einem automatisierten Schaltgetriebe, vorzugsweise mit automatisierter Schalt- und Anfahrkupplung 41, ist auch eine Lastschaltung möglich.

Dabei ist die elektrische Maschine 3 zwischen Antriebsmotor 1 und Getriebeglocke 40 angeordnet. Die elektrische Maschine 3 kann auch innerhalb der Getriebeglocke 40 angeordnet sein. Es ist auch möglich, das Getriebe 2 zwischen Antriebsmaschine 1 und elektrischer Maschine 3 vorzusehen. Dadurch kann für verschiedene elektrische Maschinen ein günstiger Bauraum genutzt werden.

Günstig ist, daß üblicherweise in Fahrzeugen mit Getrieben bereits nahezu ausreichender Bauraum vorhanden ist, um etwa eine zusätzliche Zwischenwelle 7 und/oder eine elektrische Maschine 3 vorzusehen. Gegebenenfalls muß das Getriebe 2 bzw. die Getriebeglocke 40 etwas verlängert werden, je nach Auslegung der elektrischen Maschine 3. Die erfindungsgemäße Lösung erlaubt eine sehr kompakte Integration einer elektrischen Maschine in das erfindungsgemäße Fahrzeug ohne aufwendige Konstruktionen vornehmen zu müssen.

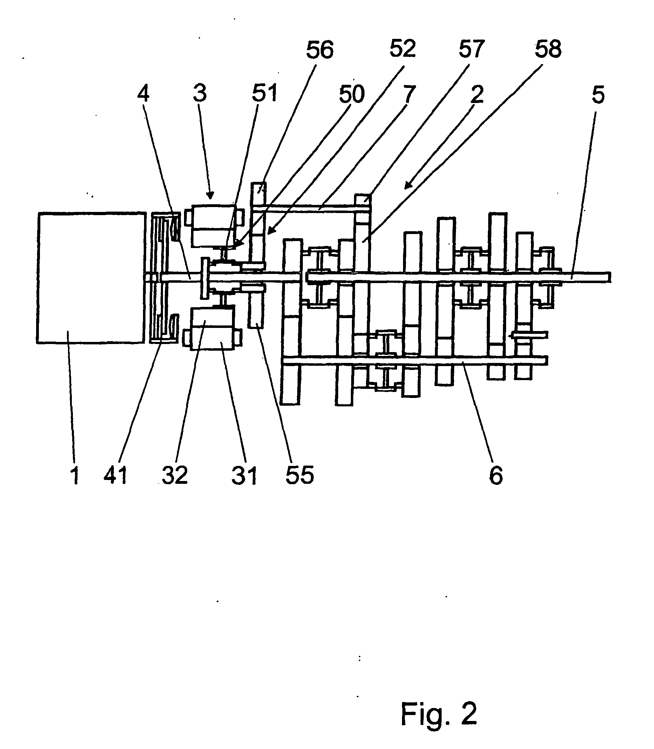

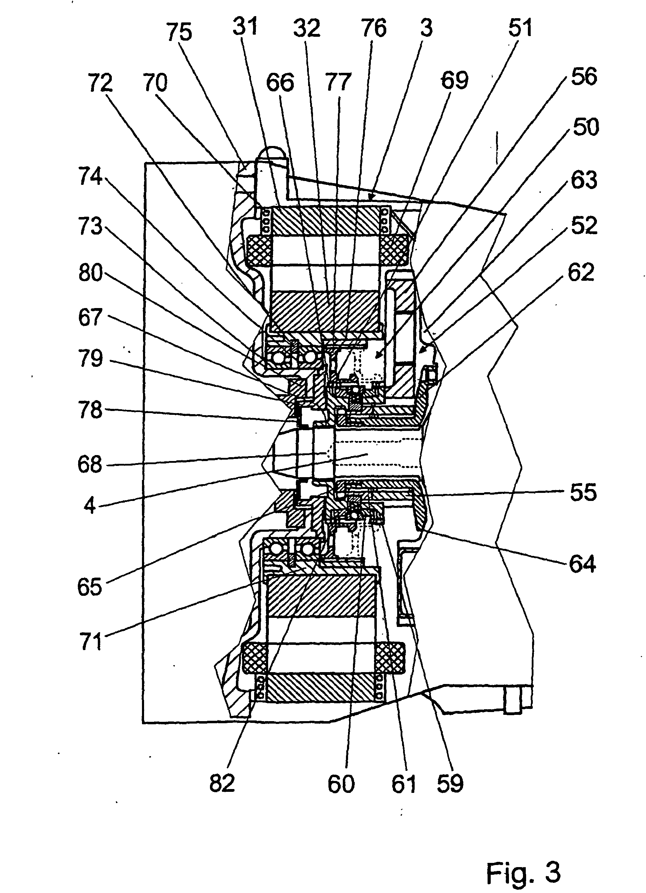

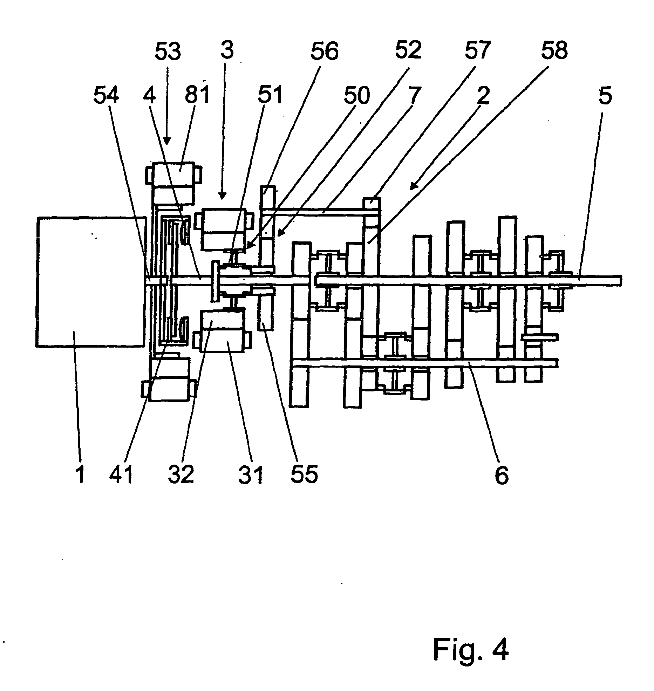

In Fig. 2 und 3 sowie in Fig. 4 sind erfindungsgemäße Anordnungen dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zur Fig. 1 verwiesen werden. Die nachfolgende Beschreibung beschränkt sich im wesentlichen auf die Unterschiede zur Fig. 1.

In der Anordnung in Fig. 2 sind ein Schalt- und Synchronisiermittel 50 und eine elektrische Maschine 3 in axialer Richtung überschneidend bzw. ist das Schalt- und Synchronisiermittel 50 radial innerhalb eines Rotors 32 der elektrischen Maschine 3 angeordnet. Durch die Ausnutzung des Bauraums innerhalb des Rotors 32 wird eine besonders kompakte Bauweise erreicht.

Die elektrische Maschine 3 und das Schalt- und Synchronisiermittel 50 umschließen eine Getriebeeingangswelle 4. Die elektrische Maschine 3 ist über das Schalt- und Synchronisiermittel 50 direkt mit der Getriebeeingangswelle 4 koppelbar, und zwar indem eine Schiebemuffe 51 des Schalt- und Synchronisiermittels 50 über einen nicht näher dargestellten Aktuator in Richtung einer Schaltkupplung 41 des Getriebes 2 verschoben wird. Es wird eine kurze Verbindung über wenig verschiedene Bauteile zwischen der Antriebsmaschine 1 und der elektrischen Maschine 3 und damit ein hoher Wirkungsgrad, insbesondere beim Start der Antriebsmaschine 1 mit der elektrischen Maschine 3, erreicht.

Die elektrische Maschine 3 ist ferner über das Schalt- und Synchronisiermittel 50 und über ein Zahnradpaar 52 mit einer zusätzlichen Zwischenwelle 7 koppelbar. Das Zahnradpaar 52 besitzt ein auf einem Getriebeflansch 62 gelagertes Losrad 55 und ein auf der zusätzlichen Zwischenwelle 7 gelagertes Festrad 56 (vgl. Fig. 2 und 3, Fig. 2 zeigt die Anordnung ohne Getriebeflansch 62).

Die Zwischenwelle 7 ist über ein auf der Zwischenwelle 7 gelagertes Festrad 57 mit einem auf einer Getriebeausgangswelle 5 gelagerten Festrad 58 verbunden.

Zur Kopplung der elektrischen Maschine 3 mit der Zwischenwelle 7 und damit mit der Getriebeausgangswelle 5 wird die Schiebemuffe 51 des Schalt- und Synchronisiermittels 50 über den Aktuator in die von der Schaltkupplung 41 abgewandte Richtung verschoben. Durch die zwei möglichen Schaltstellungen des Schalt- und Synchronisiermittels 50 wird gegenüber der Anordnung in Fig. 1 ein Schalt- und Synchronisiermittel und damit Bauraum und Gewicht eingespart.

Zum Starten der Antriebsmaschine 1 und zum Generatorbetrieb bei Fahrzeugstillstand sowie für einen Generatorbetrieb und einen Rekuperationsbetrieb, d.h. für eine Energieumwandlung während eines Bremsbetriebs von einer kinetischen Energie in eine elektrische Energie, bei einer Fahrgeschwindigkeit über 140 km/h wird die elektrische Maschine 3 über das Schalt- und Synchronisiermittel 50 direkt mit der Getriebeeingangswelle 4 gekoppelt. Für einen Generatorbetrieb und für einen Rekuperationsbetrieb bei einer Fahrgeschwindigkeit unter 140 km/h sowie für einen elektrischen Antrieb des Fahrzeugs, zum Unterstützten der Antriebsmaschine 1 bzw. zum Boosten und zum Lastschalten, d.h. zum elektrischen Antrieb des Fahrzeugs während eines Schaltvorgangs, wird die elektrische Maschine 1 über das Schalt- und Synchronisiermittel 50 und über das Zahnradpaar 52 mit der Zwischenwelle 7 verbunden.

Das Losrad 55, ein der Schaltkupplung 41 abgewandter Kupplungskörper 59, ein dem Kupplungskörper 59 zugeordneter Synchronring 60 und ein Grundkörper 61 des Schalt- und Synchronisiermittels 50 sind auf dem Getriebeflansch 62 gelagert (Fig. 2 und 3). Der Getriebeflansch 62 ist auf der der Schaltkupplung 41 abgewandten Seite an ein Getriebegehäuse 63 angeschraubt. Der Getriebeflansch 62 besitzt auf der der Schaltkupplung 41 abgewandten Seite an seinem Außendurchmesser Aussparungen 64, um eine Beeinflussung der Bauform des Getriebegehäuses 63 und des Bauraums der Zwischenwelle 7 als auch einer Vorgelegewelle 6 zu vermeiden. Das Zahnradpaar 52 und die elektrische Maschine 3 sind in axialer Richtung überschneidend angeordnet bzw. ist das Zahnradpaar 52 radial innerhalb eines Spulenpakets 69 der elektrischen Maschine 3 angeordnet, wodurch eine kompakte Bauweise erreicht wird.

Der Getriebeflansch 62 ist in einem Aufnahmebereich des Losrads 55 und des Grundkörpers 61 mit einer Wälzlauffläche ausgeführt. Ferner sind Innenseiten der gelagerten Bauteile 55, 61 mit Wälzlaufflächen ausgeführt. Das Losrad 55 ist schrägverzahnt und verursacht während des Betriebs Axialkräfte. Entstehen während des Betriebs Axialkräfte in die von der Schaltkupplung 41 abgewandten Richtung, werden diese am Getriebeflansch 62 abgestützt, und zwar über feinstbearbeitete Anlaufflächen. Entstehen während des Betriebs Axialkräfte in Richtung der Schaltkupplung 41, werden diese über den nadelgelagerten Grundkörper 61 an einer in den Getriebeflansch 62 eingeschraubten Anlaufhülse 65 abgestützt. Die Anlaufhülse 65 ist mit einem Außengewinde versehen, welches in ein Innengewinde des hülsenförmigen Getriebeflansches 62 eingeschraubt ist. Die Anlaufflächen sind mit Öl geschmiert, das mit einer Schmiermittelversorgung zu den Anlaufflächen gebracht wird.

Ist bei der Montage die Anlaufhülse 65 in den Getriebeflansch 62 eingeschraubt, kann die Schiebemuffe 51, ein der Schaltkupplung 41 zugewandter Kupplungskörper 66 und ein Synchronring 82 montiert werden. Der Kupplungskörper 66 greift mit einer Innenverzahnung 67 in eine Außenverzahnung 68 der Getriebeeingangswelle 4 ein und ist mit dieser drehfest verbunden.

Ein Stator 31 und Kühlringe 70 der elektrischen Maschine 3 sind kraftschlüssig in das Getriebegehäuse 63 eingepreßt. Der Rotor 32 der elektrischen Maschine 3 ist auf einem Rotorträger 71 befestigt, über den Rotorbleche des Rotors 32 über seitliche Verlängerungen verspannt sind. Am Innenumfang des hülsenförmigen Rotorträgers 71 ist in einer Ringnut ein Sicherungsring 72 zur axialen Positionierung des Rotorträgers 71 angeordnet. Der Rotorträger 71 ist über zwei einreihige, leicht vorgespannte, angestellte Schrägkugellager 73, 74 in O-Anordnung auf einem Aufnahmeflansch 75 gelagert, wodurch eine steife Lagerung des Rotors 31 bei geringer Lagerbreite erreicht wird. Der Sicherungsring 72 ist zwischen Außenringen der Schrägkugellager 73, 74 eingespannt, wodurch dieser, der Rotorträger 71 und der Rotor 31 in axialer Richtung fixiert sind. Über die Schmiermittelversorgung der Anlaufflächen des Schalt- und Synchronisiermittels 50 ist eine ausreichende Versorgung der Lagerung des Rotors 31 bzw. des Rotorträgers 71 gewährleistet.

Der Aufnahmeflansch 75 wird an seinem Außenumfang mit nicht näher dargestellten Schrauben an das Getriebegehäuse 63 geschraubt und bildet eine Trennwand zwischen dem Getriebe 2 und der Schaltkupplung 41. Eine Abdichtung des ölgeschmierten Getrieberaums gegenüber dem Kupplungsraum wird durch einen Radialwellendichtring 78 gewährleistet. Der Radialwellendichtring 78 ist in einer Anlaufscheibe 79 integriert, wodurch eine axial kompakte Bauweise erreicht wird. Die Anlaufscheibe 79 dient ferner zur Vorspannung der Schrägkugellager 73, 74. Die Anlaufscheibe 79 ist in den Aufnahmeflansch 75 eingeschraubt, und zwar erfolgt dies von der Außenseite bei der Montage eines Zentralausrückers 80. Axialkräfte im Schaltzustand des Zentralausrückers 80 in Richtung Getriebe 2 werden über den Aufnahmeflansch 75 sowie über die Anlaufscheibe 79, den Kupplungskörper 66, den Grundkörper 61, das Losrad 55 und über den Getriebeflansch 62 am Getriebegehäuse 63 abgestützt.

Am Innenumfang des Rotorträgers 71 ist ein Hohlring 76 mit einer Innenverzahnung kraftschlüssig eingepreßt, der mit einer Außenverzahnung eines an die Schiebemuffe 51 angeformten Rings 77 kämmt.

In der Anordnung in Fig. 4 ist neben einer ersten elektrischen Maschine 3 eine zweite elektrische Maschine 53 vorgesehen, deren Rotor 81 drehfest mit einer Ausgangswelle 54 bzw. einer Kurbelwelle einer Antriebsmaschine 1 verbunden ist und als Schwungmasse der Antriebsmaschine 1 dient.

Die beiden elektrischen Maschinen 3, 53 sind durch einen nicht näher dargestellten Torsionsschwingungsdämpfer und durch eine Schaltkupplung 41 getrennt.

Mit der zweiten elektrischen Maschine 53 kann die Antriebsmaschine 1, während das Fahrzeug über die erste elektrische Maschine 3 angetrieben wird, in besonders kurzer Zeit gestartet werden, ohne daß eine Umschaltung der ersten elektrischen Maschine 3 erforderlich ist. Die Antriebsmaschine 1 kann während des Antriebs des Fahrzeugs durch die erste elektrische Maschine 3 abgeschaltet werden, und dennoch ist kurzfristig die maximale Leistung verfügbar. Ferner kann die zweite elektrische Maschine 53 zum Antrieb des Fahrzeugs, zum Boosten, zum Rekuperieren, als auch für einen Generatorbetrieb genutzt werden.

Die zweite elektrische Maschine 53 und die Schaltkupplung 41 sowie der Torsionsschwingungsdämpfer sind in axialer Richtung überschneidend bzw. sind die Schaltkupplung 41 und der Torsionsschwingungsdämpfer radial innerhalb der zweiten elektrischen Maschine 53 angeordnet, wodurch eine axial kompakte Bauweise erreicht wird.

## Patentansprüche

1. Fahrzeug mit einem Schaltgetriebe (2) zum Übertragen eines Drehmoments einer Antriebsmaschine (1) auf Antriebsräder, wobei das Schaltgetriebe (2) eine Getriebeausgangswelle (5) und eine Getriebeeingangswelle (4) aufweist, wobei das Drehmoment der Antriebsmaschine (1) auf die Getriebeausgangswelle (5) übertragbar ist, sowie einer ersten elektrischen Maschine (3), welche einen Rotor (32) und einen Stator (31) aufweist,
wobei Mittel (7, 50, 52, 57, 58), die ein Schalt- und Synchronisiermittel (50) umfassen, vorgesehen sind, um ein elektromotorisches Moment der ersten elektrischen Maschine (3) wahlweise auf die Getriebeeingangswelle (4) oder die Getriebeausgangswelle (5) zu schalten, und wobei eine Schiebemuffe (51) des Schalt- und Synchronisiermittels (50) über die erste elektrische Maschine (3) antreibbar ist,
**dadurch gekennzeichnet, dass**
das Schalt- und Synchronisiermittel (50) radial innerhalb des Rotors (32) der elektrischen Maschine (3) angeordnet ist und
dass ein Zahnradpaar (52) zur Übertragung eines Moments zwischen der ersten elektrischen Maschine (3) und einer zusätzlichen Zwischenwelle (7), die mit einer Vorgelegewelle (6) des Schaltgetriebes (2) zusammenwirkt, und die erste elektrische Maschine (3) in axialer Richtung zumindest teilweise überschneidend angeordnet sind.

2. Fahrzeug nach Anspruch 1,
**dadurch gekennzeichnet, dass**
das Schalt- und Synchronisiermittel (50) und die erste elektrische Maschine (3) in axialer Richtung zumindest teilweise überschneidend angeordnet sind.

3. Fahrzeug nach Anspruch 1,
**dadurch gekennzeichnet, dass**
die erste elektrische Maschine (3) zwischen Antriebsmotor (1) und Getriebeglocke (40) angeordnet ist.

4. Fahrzeug nach Anspruch 1,
**dadurch gekennzeichnet, dass**
die erste elektrische Maschine (3) innerhalb der Getriebeglocke (40) angeordnet ist.

5. Fahrzeug nach Anspruch 1,
**dadurch gekennzeichnet, dass**
das Schaltgetriebe (2) zwischen Antriebsmaschine (1) und der ersten elektrischen Maschine (3) angeordnet ist.

6. Fahrzeug nach Anspruch 1,
**dadurch gekennzeichnet, dass**
neben der ersten elektrischen Maschine (3) zumindest eine zweite elektrische Maschine (53) wenigstens zur Übertragung eines Moments auf eine Ausgangswelle (54) der Antriebsmaschine (1) vorgesehen ist.

7. Fahrzeug nach Anspruch 6,
**dadurch gekennzeichnet, dass**
zumindest ein Teil der zweiten elektrischen Maschine (53) fest mit der Ausgangswelle (54) der Antriebsmaschine (1) verbunden ist und wenigstens einen Teil einer Schwungmasse der Antriebsmaschine (1) bildet.

8. Fahrzeug nach Anspruch 6 oder 7,
**dadurch gekennzeichnet, dass**
die zweite elektrische Maschine (53) und eine Kupplung (41) des Schaltgetriebes (2) in axialer Richtung zumindest teilweise überschneidend angeordnet sind.

## Claims

1. Vehicle having a variable speed gearbox (2) for transmission of a torque from a drive machine (1) to drive wheels, with the variable speed gearbox (2) having a gearbox output shaft (5) and a gearbox input shaft (4), in which case the torque of the drive machine (1) can be transmitted to the gearbox output shaft (5), and having a first electrical machine (3) which has a rotor (32) and a stator (31), with means (7, 50, 52, 57, 58) which comprise a gear-changing and synchronization means (50) being provided in order to selectively pass an electric-motor torque from the first electrical machine (3) to the gearbox input shaft (4) or to the gearbox output shaft (5), and in which case a sliding collar (51) of the gear-changing and synchronization means (50) can be driven via the first electrical machine (3),
**characterized in that**
the gear-changing and synchronization means (50) is arranged radially within the rotor (32) of the electrical machine (3), and **in that** a gearwheel pair (52) for transmission of a torque between the first electrical machine (3) and an additional intermediate shaft (7) which interacts with a lay shaft (6) for the variable speed gearbox (2), and the first electrical machine (3) are arranged such that they at least partially overlap in the axial direction.

2. Vehicle according to Claim 1, **characterized in that** the gear-changing and synchronization means (50) and the first electrical machine (3) are arranged such that they at least partially overlap in the axial direction.

3. Vehicle according to Claim 1, **characterized in that** the first electrical machine (3) is arranged between the drive machine (1) and the gear box bell-housing (40).

4. Vehicle according to Claim 1, **characterized in that** the first electrical machine (3) is arranged within the gearbox bell-housing (40).

5. Vehicle according to Claim 1, **characterized in that** the variable speed gearbox (2) is arranged between the drive machine (1) and the first electrical machine (3).

6. Vehicle according to Claim 1, **characterized in that** in addition to the first electrical machine (3), at least one second electrical machine (53) is provided at least for transmission of a torque to an output shaft (54) of the drive machine (1).

7. Vehicle according to Claim 6, **characterized in that** at least a part of the second electrical machine (53) is firmly connected to the output shaft (54) of the drive machine (1), and forms at least a part of a flywheel mass of the drive machine (1).

8. Vehicle according to Claim 6 or 7, **characterized in that** the second electrical machine (53) and a clutch (41) for the variable speed gearbox (2) are arranged such that they at least partially overlap in the axial direction.

## Revendications

1. Véhicule comprenant une boîte de vitesses (2) pour le transfert d'un couple d'un moteur d'entraînement (1) à des roues motrices, la boîte de vitesses (2) présentant un arbre de sortie de boîte de vitesses (5) et un arbre d'entrée de boîte de vitesses (4), le couple du moteur d'entraînement (1) pouvant être transmis à l'arbre de sortie de la boîte de vitesses (5), ainsi qu'une première machine électrique (3), qui présente un rotor (32) et un stator (31), des moyens (7, 50, 52, 57, 58) qui comprennent un moyen de sélection et de synchronisation (50) étant prévus, pour commuter un couple de moteur électrique de la première machine électrique (3) de manière sélective à l'arbre d'entrée de la boîte de vitesses (4) ou à l'arbre de sortie de la boîte de vitesses (5), et un manchon coulissant (51) du moyen de sélection et de synchronisation (50) pouvant être entraîné par le biais de la première machine électrique (3),
**caractérisé en ce que**
le moyen de sélection et de synchronisation (50) est disposé radialement à l'intérieur du rotor (32) de la machine électrique (3) et **en ce qu'**une paire de roues dentées (52) pour le transfert d'un couple entre la première machine électrique (3) et un arbre intermédiaire supplémentaire (7), qui coopère avec un arbre secondaire (6) de la boîte de vitesses (2), et la première machine électrique (3), sont disposées dans la direction axiale en se chevauchant au moins partiellement.

2. Véhicule selon la revendication 1,
**caractérisé en ce que**
le moyen de sélection et de synchronisation (50) et la première machine électrique (3) sont disposés dans la direction axiale en se chevauchant au moins partiellement.

3. Véhicule selon la revendication 1,
**caractérisé en ce que**
la première machine électrique (3) est disposée entre le moteur d'entraînement (1) et la cloche de la boîte de vitesses (40).

4. Véhicule selon la revendication 1,
**caractérisé en ce que**
la première machine électrique (3) est disposée à l'intérieur de la cloche de boîte de vitesses (40).

5. Véhicule selon la revendication 1,
**caractérisé en ce que**
la boîte de vitesses (2) est disposée entre le moteur d'entraînement (1) et la première machine électrique (3).

6. Véhicule selon la revendication 1,
**caractérisé en ce que**
l'on prévoit en plus de la première machine électrique (3) au moins une deuxième machine électrique (53) au moins pour le transfert d'un couple à un arbre de sorti (54) du moteur d'entraînement (1).

7. Véhicule selon la revendication 6,
**caractérisé en ce**
**qu'**au moins une partie de la deuxième machine électrique (53) est connectée fixement à l'arbre de sortie (54) du moteur d'entraînement (1) et forme au moins une partie d'une masse d'inertie du moteur d'entraînement (1).

8. Véhicule selon la revendication 6 ou 7,
**caractérisé en ce que**
la deuxième machine électrique (53) et un accouplement (41) de la boîte de vitesses (2) sont disposés dans la direction axiale en se chevauchant au moins partiellement.
